# FASCICULE DE BREVET EUROPEEN

(11) **EP 2 284 772 B1**
(45) Date de publication et mention de la délivrance du brevet: **03.10.2018**
(21) Numéro de dépôt: 10171087.9
(22) Date de dépôt: 28.07.2010
(51) Int. Cl.: G06K 19/067, G06K 19/07, H01L 33/50

(54) **Carte à microcircuit comprenant une diode électroluminescente**
Chipkarte mit einer Leuchtdiode
Chip card comprising a light emitting diode

(30) Priorité: 11.08.2009 FR 0955624
(43) Date de publication de la demande: 16.02.2011
(73) Titulaire: IDEMIA France, 92700 Colombes (FR)
(72) Inventeur: Vere, Denis, 35370, ARGENTRE DU PLESSIS (FR); Le Garrec, Loïc, 35220, Châteaubourg (FR)
(74) Mandataire: Delumeau, François Guy

(56) Documents cités:
- EP-A- 1 988 583
- US-A1- 2009 167 495

## Description

La présente invention concerne le domaine technique des cartes à microcircuit, désignées plus couramment par « cartes à puce ».

Elle s'applique plus particulièrement mais non spécifiquement au domaine des cartes à puce comprenant une antenne magnétique de communication à champ proche, par exemple formée d'un enroulement d'une pluralité de spires électriquement conductrices, incorporée dans la carte, permettant d'établir une communication dite « sans contact » avec un dispositif de lecture de carte sans contact.

De telles cartes peuvent être de type « contactless », car ne comportant qu'une interface « sans contact » ou de type « dual interface » car comportant deux interfaces : une première interface « sans contact » et une deuxième interface utilisant des contacts électriques externes pour établir une communication dite « avec contact ».

Dans ces deux types de cartes à puce, le corps de la carte incorpore généralement un circuit d'antenne comprenant l'antenne de communication à champ proche et un microcircuit raccordé électriquement aux deux extrémités de l'antenne. Le microcircuit forme ainsi un module de communication, désigné également par module NFC (acronyme anglais pour « Near Field Communication »).

Un porteur d'une telle carte peut accéder à divers services sans fil, tels que par exemple des services de paiement électronique sécurisé, des services d'ouverture de porte ou peut échanger des informations avec un dispositif de lecture de la carte sans contact adapté à la technologie NFC.

Pour utiliser ce type de services ou pour échanger des informations, l'utilisateur approche son terminal mobile d'un tel dispositif de lecture, tel que par exemple un terminal de paiement ou une borne d'accès, de manière à ce que la communication en champ proche puisse s'établir.

Il est connu de l'état de la technique d'équiper de telles cartes d'un voyant lumineux apte à s'allumer lorsque la communication en champ proche s'établit. Ceci permet notamment d'informer l'utilisateur de la carte du bon déroulement de la communication ou au contraire de son échec.

Le voyant lumineux comprend par exemple une diode électroluminescente apte à émettre une lumière lorsqu'elle est parcourue par un courant d'intensité prédéfinie. La diode est alors raccordée au circuit d'antenne de telle manière que, lorsque la carte est placée à proximité du lecteur de carte, un courant circule dans le circuit d'antenne entraînant une émission lumineuse de la diode.

La diode comprend habituellement une jonction semi-conductrice apte à émettre de la lumière d'une couleur prédéfinie lorsqu'elle est activée et un capot, c'est-à-dire un boîtier externe transparent de protection de cette jonction.

La couleur prédéfinie d'émission de la diode dépend notamment de sa jonction semi-conductrice. Il est ainsi possible d'obtenir différentes couleurs de voyants lumineux en modifiant la nature de la jonction semi-conductrice de la diode.

Il peut être alors intéressant, pour des raisons esthétiques, de choisir la couleur de la diode en fonction d'un visuel de la carte. Par exemple, choisir une diode de couleur jaune pour représenter un soleil, une diode de couleur rouge pour représenter un voyant d'alarme, etc.

Or, la configuration du circuit d'antenne et de la diode doit être choisie de manière à définir ensemble une fréquence de résonance correspondant sensiblement à une fréquence de communication en champ proche prédéfinie telle que par exemple celle définie par la norme ISO 14443 sensiblement égale à 13,56 MHz.

Cette fréquence de résonance dépend notamment des dimensions et de la forme de l'antenne ainsi que de la capacité de la jonction semi-conductrice de la diode.

Il en résulte que pour produire deux cartes distinctes avec des voyants lumineux de couleurs distinctes, il est nécessaire de disposer de deux diodes ayant des jonctions semi-conductrices distinctes et par conséquent de capacités électriques distinctes.

Ainsi, pour obtenir une fréquence de résonance sensiblement égale à la fréquence de communication en champ proche prédéfinie, la forme et les dimensions du circuit d'antenne sont ajustées en prenant en compte les caractéristiques électriques de la diode, et notamment celles de la jonction semi-conductrice.

L'inconvénient est que cela occasionne des coûts de production et de développements supplémentaires. En effet, pour chaque visuel de carte nécessitant une nouvelle couleur de voyant lumineux, le circuit d'antenne doit être modifié de façon considérable et il est nécessaire d'effectuer de nombreux réglages ou changements d'équipement de production, ce qui peut s'avérer relativement long et coûteux.

Un exemple de l'art antérieur est divulgué dans US2009/167495.

L'invention a notamment pour but de réaliser des cartes à voyants lumineux de couleurs différentes de manière simple et peu coûteuse.

A cet effet, l'invention a pour objet une carte à microcircuit comprenant au moins une diode électroluminescente munie d'un capot, apte à émettre une première couleur prédéfinie et un circuit d'antenne de communication à champ proche, le circuit et la diode étant configurés pour que la diode émette de la lumière lorsqu'un courant d'intensité prédéfinie circule dans le circuit, **caractérisée en ce que** le capot de la diode est revêtu d'une masse de matériau formant des moyens de sélection d'un ensemble de longueurs d'onde parmi celles composant la première couleur de manière à ce que la lumière transmise par la masse ait une deuxième couleur prédéfinie différente de la première couleur.

Dans l'invention, le capot, c'est-à-dire le boîtier externe de la diode, est recouvert d'une masse de matériau qui forme des moyens de sélection de longueurs d'onde. Ainsi, lorsque la lumière émise par la diode est transmise à travers la masse de matériau, cette masse joue le rôle d'un filtre qui supprime les longueurs d'onde indésirables pour ne laisser passer que les longueurs d'onde composant la lumière de la deuxième couleur prédéfinie.

En outre, cette masse de matériau présente l'avantage de former une protection mécanique de la diode aux agressions externes et par exemple aux efforts de torsion et de flexion et également aux efforts de compression subis lors de la fabrication de la carte, notamment lors des opérations de lamination.

Du fait qu'il est possible d'obtenir plusieurs couleurs de lumière du voyant lumineux sans changer de diode, la configuration du circuit d'antenne et de la diode est inchangée d'une carte à l'autre quelque soit la couleur sélectionnée pour le voyant lumineux.

Ceci permet notamment d'effectuer des économies de coûts de production et de simplifier de façon considérable la fabrication de cartes avec des voyants lumineux de différentes couleurs.

Il est souhaitable de choisir une diode émettant une lumière composée d'un grand nombre de longueurs d'onde pour pouvoir obtenir un grand nombre de couleurs distinctes par filtrage.

Ainsi, de préférence, la diode émet une lumière blanche composée de longueurs d'onde s'étendant dans l'ensemble du spectre visible.

Une carte selon l'invention peut en outre comporter l'une ou plusieurs des caractéristiques selon lesquelles :
- la première couleur prédéfinie est sensiblement blanche ;
- la diode comprend une jonction semi-conductrice d'émission de longueurs d'onde dans une région spectrale primaire et des moyens de conversion des longueurs d'onde de la région primaire vers une région spectrale secondaire correspondant à la première couleur prédéfinie ;
- la région spectrale primaire s'étend d'environ 370 nm à 420 nm ou 420 nm à 480 nm et la région spectrale secondaire s'étend sensiblement dans l'ensemble du spectre visible ;
- le matériau de la masse comprend essentiellement un produit coloré de couleur correspondant sensiblement à la deuxième couleur prédéfinie ;
- le matériau de la masse comprend essentiellement une résine polymérisable à une lumière ultra-violette et/ou une résine thermodurcissable ;
- la configuration du circuit d'antenne et de la diode est définie par des paramètres de configuration choisis parmi une longueur d'un fil d'une antenne du circuit, un écart entre deux spires de l'antenne, une largeur du fil de l'antenne, un nombre de tours de l'antenne, une capacité d'une jonction semi-conductrice de la diode ;
- le circuit d'antenne comprend un microcircuit et une antenne reliée au microcircuit ;
- la diode est de type CMS (composant monté en surface) ;
- la carte comprend un corps de carte incorporant le circuit d'antenne et la diode, agencé pour laisser passer la lumière susceptible d'être émise par la diode.

L'invention a encore pour objet un procédé de fabrication d'une carte selon l'une quelconque des revendications précédentes, la carte comprenant un corps obtenu par lamination d'une pluralité de couches dont l'une au moins porte le circuit d'antenne et la diode, **caractérisé en ce que,** avant lamination des couches entre elles, on dépose un matériau sous forme d'une masse sur le capot de la diode.

D'autres caractéristiques et avantages de l'invention apparaîtront à la lumière de la description qui suit, faite en référence aux dessins annexés dans lesquels :
- la figure 1 représente une vue de dessus d'une carte à microcircuit selon l'invention comprenant une diode électroluminescente ;
- la figure 2 représente une vue de dessus en transparence de la carte de la figure 1 montrant notamment un circuit d'antenne et la diode électroluminescente ;
- la figure 3 est une vue en coupe détaillée de la diode électroluminescente des figures 1 et 2.

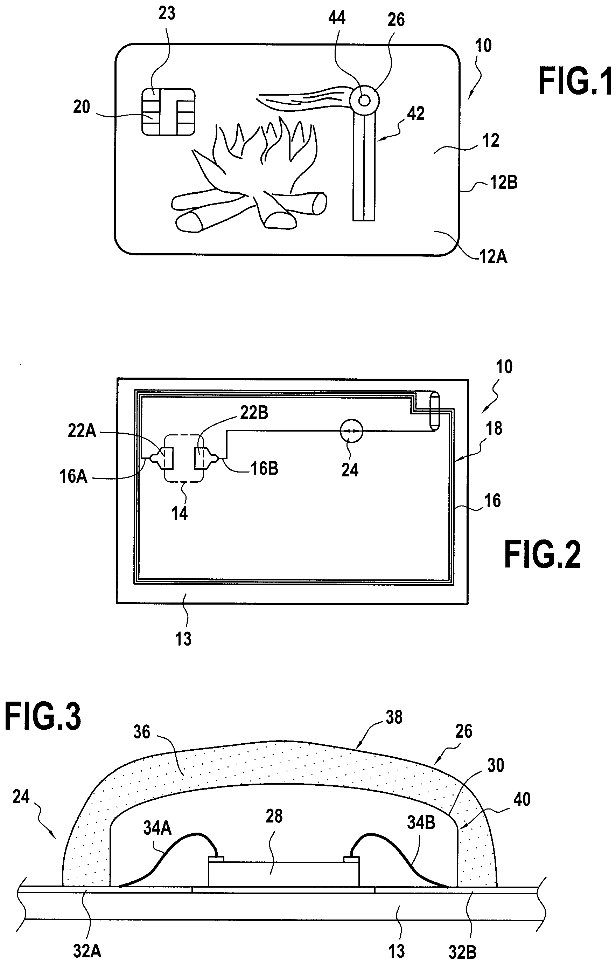

On a représenté sur **la** **figure 1** une carte à microcircuit selon un premier mode de réalisation. Cette carte est désignée par la référence générale 10.

Cette carte 10 comprend un corps de carte 12 délimité par des première 12A et deuxième 12B faces opposées. Le corps de carte 12 délimite des dimensions extérieures de la carte 10, les dimensions extérieures étant par exemple définies par le format ID-1 de la norme ISO 7816.

Ce corps de carte 12 est par exemple réalisé dans un matériau plastique comprenant essentiellement du polychlorure de vinyle. Eventuellement, le corps de carte 12 peut être réalisé dans tout autre matériau approprié.

Dans l'exemple décrit et de préférence, le corps de carte 12 est formé par lamination d'une superposition de couches 13 de manière à former un support de carte semi-rigide, voire rigide.

Dans le mode de réalisation de l'invention, la carte 10 est une carte dite duale. A cet effet, la carte 10 comprend un circuit 18 d'antenne de communication à champ proche. De préférence, le circuit 18 comprend un microcircuit 14 (représenté en pointillé sur **la** **figure 2**) et une antenne 16 de communication à champ proche, reliée au microcircuit 14 permettant une communication sans contact avec un lecteur de carte externe (non représenté).

Eventuellement, dans une variante non illustrée sur les figures, la carte 10 peut être une carte de type « sans contact ». Dans ce cas, la carte 10 ne comprend pas d'interface externe permettant une communication avec contact et le circuit d'antenne 18 est complètement intégré dans le corps 12 de la carte 10.

En outre, le microcircuit 14 est raccordé électriquement à une interface externe 20 de contacts pour permettre également l'établissement d'une communication avec contact avec un lecteur de carte externe (non représenté). De façon classique, cette interface externe 20 comprend huit plages 23 de contact électrique définis par la norme ISO 7816 des cartes à puce.

Comme cela est représenté sur **la** **figure 2****,** l'antenne 16 est formée par exemple par une pluralité de spires électriquement conductrices de forme générale rectangulaire longeant, au moins partiellement, la périphérie du corps de carte 12. Dans une variante non illustrée, l'antenne 16 peut s'étendre seulement sur une moitié du corps de carte 12.

En outre, dans cet exemple, l'antenne 16 comprend deux parties d'extrémité 16A et 16B destinées à être raccordées électriquement au microcircuit 14.

Dans l'exemple décrit, les deux extrémités 16A, 16B sont raccordées électriquement au microcircuit 14 par l'intermédiaire de plages de connexion du microcircuit 14 prévues à cet effet ou, comme cela est illustré sur **la** **figure 2****,** par l'intermédiaire de pastilles 22A, 22B de contact de forme adaptée.

Les pastilles 22A, 22B sont par exemple raccordées électriquement respectivement aux extrémités 16A, 16B de l'antenne 16 par un procédé de brasage ou soudage classique.

Comme cela est représenté sur **la** **figure 2****,** le circuit d'antenne 18 est incorporé dans le corps de carte 12. L'antenne 16 est de préférence formée par incrustation d'un fil électriquement conducteur sur une des couches 13 du corps 12 avant sa lamination par exemple au moyen d'un procédé à ultra-son.

En outre, dans l'exemple décrit, une cavité de réception du microcircuit 14 est usinée dans le corps 12 sensiblement au droit des pastilles 22A, 22B afin de les découvrir au moins partiellement de manière à ce que des plages de contact soient mises à nues pour le raccordement électrique du microcircuit 14 et de l'antenne 16.

Plus particulièrement, la carte 10 comprend au moins une diode électroluminescente 24, munie d'un capot 30, apte à émettre une première couleur prédéfinie. La diode électroluminescente 24 forme ainsi un voyant lumineux 26 apte à indiquer le bon établissement d'une communication en champ proche avec un lecteur de carte externe. Cette diode 24 est illustrée en détail sur **la** **figure 3****.**

De façon plus précise, le circuit d'antenne 18 et la diode 24 sont configurés pour que la diode 24 émette de la lumière lorsqu'un courant d'intensité prédéfinie circule dans le circuit 18, c'est-à-dire lorsque la communication en champ proche est établie avec un lecteur de carte externe sans contact.

De façon connue en soi, une diode 24 est un composant électronique capable d'émettre de la lumière lorsqu'elle est parcourue par un courant électrique.

De façon classique et comme cela est représenté sur **la** **figure 3****,** ce composant 24 comprend une jonction semi-conductrice 28 déterminant la longueur d'onde d'émission de la diode 24, cette jonction étant de préférence encapsulée dans un boîtier 30, désigné couramment par le terme « capot », et réalisé par exemple dans un matériau comprenant essentiellement une résine époxy.

Généralement, les longueurs d'onde de la lumière émise par la diode 24 sont déterminées notamment par la nature des matériaux semi-conducteurs composant la jonction semi-conductrice 28 et dans ce cas, le capot 30 est de préférence transparent.

Dans l'exemple décrit, la première couleur prédéfinie émise par la diode 24 est sensiblement blanche.

Pour obtenir cette première couleur prédéfinie blanche, la diode 24 comprend une jonction semi-conductrice 28 d'émission de longueurs d'onde dans une région spectrale primaire et des moyens 40 de conversion des longueurs d'onde de cette région primaire vers une région spectrale secondaire correspondant à la première couleur prédéfinie blanche.

Ainsi, dans cet exemple, les moyens de conversion 40 sont formés par le capot 30 qui est réalisé dans un matériau à base de luminophores (généralement du YAG : Ce (Grenet d'yttrium-aluminium dopé au néodyme)) et qui forme une couche d'absorption d'énergie permettant une conversion des longueurs d'onde de la région spectrale primaire vers la région spectrale secondaire.

Dans cet exemple, la région spectrale primaire s'étend d'environ 370nm à 420nm ou 420nm à 480nm (ultra-violet à bleu) et la région spectrale secondaire s'étend sensiblement dans l'ensemble du spectre visible (400nm à 725nm).

Comme cela est représenté **la** **figure 3****,** la diode 24 comprend deux contacts électriques 32A, 32B pour son raccordement de la diode 24 à des composants externes. Ces deux contacts 32A, 32B sont reliés de façon filaire (fils électriquement conducteurs 34A, 34B) à la jonction 28.

De préférence, la diode 24 est de type CMS (Composant Monté en Surface). Ainsi, de façon classique, un composant monté en surface peut être rapporté sur un substrat d'un circuit imprimé par collage, brasage ou soudage à la différence d'un composant muni de broches traversantes dont l'assemblage au substrat nécessite la formation de trous dans le substrat pour laisser passer les broches. Dans l'exemple illustré, la diode 24 est assemblée à la couche 13 du corps de carte non laminé par soudage ou brasage.

En outre, de préférence, le corps 12 est agencée pour laisser passer la lumière susceptible d'être émise par la diode 24. Ainsi, le corps 12 comprend par exemple une zone sensiblement transparente, voire éventuellement même translucide, s'étendant au droit de la diode 24. Par exemple, la couche 13 portant le circuit d'antenne et la diode est intercalée entre au moins deux couches transparentes, voire translucides.

La configuration du circuit d'antenne 18 et de la diode 24 est définie par des paramètres de configuration choisis parmi une longueur du fil de l'antenne 16 du circuit 18, un écart entre deux spires de l'antenne 16, une largeur du fil de l'antenne 16, un nombre de tours de l'antenne 16, la capacité de la jonction semi-conductrice 28 de la diode 24.

Les paramètres de configuration sont ainsi ajustés de manière à ce que la fréquence de fonctionnement de l'ensemble comprenant le circuit d'antenne 18 et la diode 24 permette la communication en champ proche avec un lecteur de carte externe. Par exemple, la fréquence de fonctionnement est réglée à 13.56 MHz telle que définie par la norme ISO 14 443.

Plus particulièrement, grâce à l'invention, il est possible de modifier la première couleur prédéfinie de la diode 24 sans modifier sa jonction 28 et donc indépendamment de la configuration du circuit d'antenne 18 et de la diode 24.

Plus précisément, conformément à l'invention, le capot 30 de la diode 24 est revêtue d'une masse 36 de matériau.

Cette masse de matériau 36 forme des moyens 38 de sélection d'un ensemble de longueurs d'onde parmi celles composant la première couleur de manière à ce que la lumière transmise par la masse 36 ait une deuxième couleur prédéfinie différente de la première couleur.

Le matériau de la masse 36 comprend par exemple essentiellement un produit colorant dont la couleur correspond sensiblement à la deuxième couleur prédéfinie souhaitée. De préférence, le matériau de la masse 36 comprend essentiellement une résine polymérisable à une lumière ultra-violette et/ou une résine thermodurcissable. Le produit colorant comprend par exemple une encre colorée classique.

Dans l'exemple illustré, le visuel de la carte 10 représente une allumette 42 avec une extrémité incandescente 44. Le voyant lumineux 24 formé par la diode s'étend dans cette extrémité 44 de manière à donner une impression d'allumer l'allumette 42 lorsque la communication s'établit.

La couleur du voyant 24 est dans ce cas rouge. Le produit colorant est ainsi de couleur rouge ce qui permet de sélectionner les longueurs d'onde comprises sensiblement entre 625 nm et 725 nm dans le spectre visible, qui s'étend sensiblement de 400 nm à 745 nm, émis par la diode 24.

En variante, le visuel peut comporter un soleil et dans ce cas la carte 10 porte un voyant lumineux de couleur sensiblement jaune. Dans ce cas, la masse 36 déposée sur le capot 30 de la diode 24 comprend un produit coloré jaune permettant de sélectionner les longueurs d'onde comprises entre 565 nm et 590 nm parmi les longueurs d'ondes composant la couleur blanche émise par la diode 24.

On va maintenant décrire les principales étapes d'un procédé de fabrication d'une carte selon l'invention.

Au cours d'une première étape, on positionne le fil d'antenne 16 sur une face d'une première couche 13 du corps de carte 12 non laminé par exemple au moyen d'un procédé ultra-son et au cours d'une seconde étape, une machine avec un bras articulé de type « pick-and-place machine » positionne la diode électroluminescente 24 sur une portion du trajet du fil de l'antenne 16 et la fixe sur la couche 13 par brasage, collage ou soudage.

En outre, afin de permettre le raccordement électrique de l'antenne 16 et du microcircuit 14, les extrémités 16A, 16B du fil d'antenne 16 sont soudées aux pastilles 22A, 22B.

Puis, au cours d'une troisième étape, on dépose un matériau sous forme d'une masse 36 sur le capot 30 de la diode 24 et on procède alors à la polymérisation ou au thermodurcissement de cette masse 36.

Une fois, la masse de matériau 36 durcie, on intercale la première couche 13 entre deux couches de compensation destinées à corriger sensiblement les irrégularités de surface de la première couche 13 portant la diode 24. De préférence, les couches de compensation sont réalisées dans un matériau transparent ou éventuellement translucide de manière à ce que le voyant lumineux 24 soit suffisamment visible, même à travers les couches.

Une fois les couches superposées, ces dernières sont laminées. Une cavité de réception du microcircuit 14 est alors usinée de manière à mettre à nu les pastilles de contact 22A, 22B pour leur raccordement électrique avec le microcircuit 24.

Grâce à l'invention, il est possible de choisir parmi une grande palette de couleurs différentes la couleur prédéfinie du voyant lumineux, sans modifier la configuration du circuit électronique comprenant les composants électroniques, tels que l'antenne, le microcircuit et la diode.

Ceci permet d'adapter la couleur du voyant lumineux à un graphisme spécifique de la carte en cours de production sans nécessiter une modification des chaînes de production et notamment des positionnements relatifs et de la forme du circuit d'antenne et de la diode.

En outre, grâce à la résine, formée par la masse de matériau, il est possible d'obtenir une plus grande résistance de ce composant lors des différentes étapes de fabrication de la carte, notamment lors des étapes de lamination. Il en résulte un moindre taux de rejets de cartes défectueuses lors de leur fabrication.

Il est bien entendu que les modes de réalisation qui viennent d'être décrits ne présentent aucun caractère limitatif et qu'ils pourront recevoir toute modification désirable sans sortir pour cela du cadre de l'invention. En particulier, il serait conforme à l'invention d'appliquer les caractéristiques des revendications à tout type de cartes et notamment aux cartes sans contact.

## Revendications

1. Carte à microcircuit (10) comprenant au moins une diode électroluminescente (24) munie d'un capot (30), apte à émettre une première couleur prédéfinie, une antenne (16) de communication à champ proche et un circuit (18) d'antenne de communication à champ proche, le circuit (18) et la diode (24) étant configurés pour que la diode (24) émette de la lumière lorsqu'un courant d'intensité prédéfinie circule dans le circuit (18), **caractérisée en ce que** la diode (24) est positionnée sur une portion du trajet de ladite antenne (16) et **en ce que** le capot (30) de la diode (24) est revêtu d'une masse (36) de matériau formant des moyens (38) de sélection d'un ensemble de longueurs d'onde parmi celles composant la première couleur de manière à ce que la lumière transmise par la masse (36) ait une deuxième couleur prédéfinie différente de la première couleur.

2. Carte (10) selon la revendication précédente, dans lequel la première couleur prédéfinie est sensiblement blanche.

3. Carte (10) selon la revendication 1 ou 2, dans lequel la diode (24) comprend une jonction semi-conductrice (28) d'émission de longueurs d'onde dans une région spectrale primaire et des moyens (40) de conversion des longueurs d'onde de la région primaire vers une région spectrale secondaire correspondant à la première couleur prédéfinie.

4. Carte (10) selon la revendication précédente, dans lequel la région spectrale primaire s'étend d'environ 370 nm à 420 nm ou 420 nm à 480 nm et la région spectrale secondaire s'étend sensiblement dans l'ensemble du spectre visible.

5. Carte (10) selon la revendication précédente, dans lequel le matériau de la masse (36) comprend essentiellement un produit coloré de couleur correspondant sensiblement à la deuxième couleur prédéfinie.

6. Carte (10) selon la revendication 3 ou 4, dans lequel le matériau de la masse (36) comprend essentiellement une résine polymérisable à une lumière ultra-violette et/ou une résine thermodurcissable.

7. Carte (10) selon l'une quelconque des revendications précédentes, dans lequel la configuration du circuit d'antenne (18) et de la diode (24) est définie par des paramètres de configuration choisis parmi une longueur d'un fil d'une antenne (16) du circuit (18), un écart entre deux spires de l'antenne (16), une largeur du fil de l'antenne (16), un nombre de tours de l'antenne (16), une capacité d'une jonction semi-conductrice (28) de la diode (24).

8. Carte (10) selon l'une quelconque des revendications précédentes, dans laquelle le circuit d'antenne (18) comprend un microcircuit (14) et une antenne (16) reliée au microcircuit (14).

9. Carte (10) selon l'une quelconque des revendications précédentes, dans laquelle la diode (24) est de type CMS (composant monté en surface).

10. Carte (10) selon l'une quelconque des revendications précédentes, comprenant un corps de carte (12) incorporant le circuit d'antenne (18) et la diode (24), agencé pour laisser passer la lumière susceptible d'être émise par la diode.

11. Procédé de fabrication d'une carte (10) selon l'une quelconque des revendications précédentes, la carte (10) comprenant un corps (12) obtenu par lamination d'une pluralité de couches dont l'une au moins porte le circuit d'antenne (18) et la diode (24), **caractérisé en ce que,** avant lamination des couches entre elles, on dépose un matériau sous forme d'une masse (36) sur le capot (30) de la diode (24).

## Patentansprüche

1. Chipkarte (10), umfassend mindestens eine Leuchtdiode (24), die mit einer Abdeckung (30) versehen und geeignet ist, eine erste vorbestimmte Farbe zu emittieren, eine Nahfeldkommunikationsantenne (16) und eine Schaltung (18) der Nahfeldkommunikationsantenne, wobei die Schaltung (18) und die Diode (24) konfiguriert sind, damit die Diode (24) Licht emittiert, wenn ein Strom vorbestimmter Intensität in der Schaltung (18) fließt, **dadurch gekennzeichnet, dass** die Diode (24) auf einem Abschnitt des Verlaufs der Antenne (16) angeordnet ist, und dadurch, dass die Abdeckung (30) der Diode (24) mit einer Masse (36) eines Materials beschichtet ist, das Mittel (38) zum Auswählen eines Satzes von Wellenlängen unter jenen, aus denen die erste Farbe zusammengesetzt ist, derart bildet, dass das Licht, das durch die Masse (36) transmittiert wird, eine zweite vorbestimmte Farbe aufweist, die sich von der ersten Farbe unterscheidet.

2. Karte (10) gemäß dem vorangehenden Anspruch, wobei die erste vorbestimmte Farbe im Wesentlichen weiß ist.

3. Karte (10) gemäß Anspruch 1 oder 2, wobei die Diode (24) einen Halbleiterübergang (28) der Emission von Wellenlängen in einem primären Spektralbereich und Mittel (40) zum Umwandeln der Wellenlängen von dem primären Bereich zu einem sekundären Spektralbereich, der der ersten vorbestimmten Farbe entspricht, aufweist.

4. Karte (10) gemäß dem vorhergehenden Anspruch, wobei sich der primäre Spektralbereich von etwa 370 nm bis 420 nm oder 420 nm bis 480 nm erstreckt und sich der sekundäre Spektralbereich im Wesentlichen im gesamten sichtbaren Spektrum erstreckt.

5. Karte (10) gemäß dem vorhergehenden Anspruch, wobei das Material der Masse (36) im Wesentlichen ein gefärbtes Produkt von einer Farbe aufweist, die im Wesentlichen der zweiten vorbestimmten Farbe entspricht.

6. Karte (10) gemäß Anspruch 3 oder 4, wobei das Material der Masse (36) im Wesentlichen ein durch Ultraviolettlicht polymerisierbares Harz und/oder ein hitzehärtbares Harz aufweist.

7. Karte (10) gemäß einem der vorhergehenden Ansprüche, wobei die Konfiguration der Antennenschaltung (18) und der Diode (24) durch Konfigurationsparameter definiert ist, die aus einer Länge eines Drahtes einer Antenne (16) der Schaltung (18), einem Abstand zwischen zwei Windungen der Antenne (16), einer Breite des Drahtes der Antenne (16), einer Anzahl an Umdrehungen der Antenne (16), einer Kapazität eines Halbleiterübergangs (28) der Diode (24) ausgewählt sind.

8. Karte (10) gemäß einem der vorhergehenden Ansprüche, wobei die Antennenschaltung (18) eine Mikroschaltung (14) und eine Antenne (16) aufweist, die an die Mikroschaltung (14) angeschlossen ist.

9. Karte (10) gemäß einem der vorhergehenden Ansprüche, wobei die Diode (24) vom Typ SMD-Diode (oberflächenmontiertes Bauelement) ist.

10. Karte (10) gemäß einem der vorhergehenden Ansprüche, umfassend einen Kartenkörper (12), der die Antennenschaltung (18) und die Diode (24) enthält, der ausgebildet ist, um das Licht durchzulassen, das von der Diode emittiert werden kann.

11. Verfahren zur Herstellung einer Karte (10) gemäß einem der vorhergehenden Ansprüche, wobei die Karte (10) einen Körper (12) aufweist, der durch Laminieren von mehreren Schichten erhalten wird, wovon mindestens eine die Antennenschaltung (18) und die Diode (24) trägt, **dadurch gekennzeichnet, dass** vor dem Laminieren der Schichten untereinander ein Material in Form von einer Masse (36) auf die Abdeckung (30) der Diode (24) aufgetragen wird.

## Claims

1. A micro-circuit card (10) comprising at least one light-emitting diode (24) provided with a cover (30), able to emit a first predefined color, an antenna (16) for near-field communication and an antenna circuit (18) for near-field communication, the circuit (18) and the diode (24) being configured so that the diode (24) emits light when a current with a predefined intensity circulates in the circuit (18), **characterized in that** the diode (24) is positioned on a portion of the path of said antenna (16) and **in that** the cover (30) of the diode (24) is coated with a mass (36) of material forming means (38) for selecting a set of wavelengths from among those making up the first color such that the light transmitted by the mass (36) has a second predefined color different from the first color.

2. The card (10) according to the preceding claim, wherein the first predefined color is substantially white.

3. The card (10) according to claim 1 or 2, wherein the diode (24) comprises a semi-conductive junction (28) for emitting wavelengths in a primary spectral region and means (40) for converting wavelengths from the primary region toward a secondary spectral region corresponding to the first predefined color.

4. The card (10) according to the preceding claim, wherein the primary spectral region extends from about 370 nm to 420 nm or 420 nm to 480 nm and the secondary spectral region extends substantially in the entire visible spectrum.

5. The card (10) according to the preceding claim, wherein the material of the mass (36) essentially comprises a product colored a color substantially corresponding to the second predefined color.

6. The card (10) according to claim 3 or 4, wherein the material of the mass (36) essentially comprises a resin polymerizable with an ultraviolet light and/or a thermosetting resin.

7. The card (10) according to any one of the preceding claims, wherein the configuration of the antenna circuit (18) and the diode (24) is defined by configuration parameters chosen from among a length of a wire of an antenna (16) of the circuit (18), a gap between two turns of the antenna (16), a width of the wire of the antenna (16), a number of revolutions of the antenna (16), a capacity of a semi-conductive junction (28) of the diode (24).

8. The card (10) according to any one of the preceding claims, wherein the antenna circuit (18) comprises a microcircuit (14) and an antenna (16) connected to the microcircuit (14).

9. The card (10) according to any one of the preceding claims, wherein the diode (24) is of the SMC (surface-mounted component) type.

10. The card (10) according to any one of the preceding claims, comprising a card body (12) incorporating the antenna circuit (18) and the diode (24), arranged to allow the light that may be emitted by the diode to pass.

11. A method for manufacturing a card (10) according to any one of the preceding claims, the card (10) comprising a body (12) obtained by laminating a plurality of layers, at least one of which bears the antenna circuit (18) and the diode (24), **characterized in that,** before laminating the layers relative to one another, a material is deposited in the form of a mass (36) on the cover (30) of the diode (24).
